# EUROPÄISCHE PATENTSCHRIFT

(11) **EP 3 679 262 B1**
(45) Veröffentlichungstag und Bekanntmachung des Hinweises auf die Patenterteilung: **04.05.2022**
(21) Anmeldenummer: 18759551.7
(22) Anmeldetag: 21.08.2018
(51) Int. Cl.: F16D 1/08

(54) **ANORDNUNG ZUR KRAFTSCHLÜSSIGEN VERBINDUNG EINER ADAPTERWELLE MIT EINER WELLE MITTELS EINES SPANNRINGS**
ASSEMBLY FOR CONNECTING AN ADAPTER SHAFT TO A SHAFT IN A FORCE-FITTING MANNER USING A CLAMPING RING
ENSEMBLE PERMETTANT DE RÉALISER UN ASSEMBLAGE À FORCE ENTRE UN ARBRE ADAPTATEUR ET UN ARBRE AU MOYEN D'UN ANNEAU DE SERRAGE

(30) Priorität: 08.09.2017 DE 102017008438
(43) Veröffentlichungstag der Anmeldung: 15.07.2020
(73) Patentinhaber: SEW-EURODRIVE GmbH & Co. KG, 76646 Bruchsal (DE)
(72) Erfinder: SCHILLINGER, Jens, 76437 Rastatt (DE); HALLER, Sascha, 76135 Karlsruhe (DE); WÖPPERMANN, Markus, 76307 Karlsbad (DE)
(86) Internationale Anmeldenummer: PCT/EP2018/025218
(87) Internationale Veröffentlichungsnummer: WO 2019/048080

(56) Entgegenhaltungen:
- DE-A1-102011 013 887
- DE-A1-102014 007 063
- DE-B3-102004 011 361

## Beschreibung

Die Erfindung betrifft eine Anordnung zur kraftschlüssigen Verbindung einer Adapterwelle mit einer Welle mittels eines Spannrings.

Aus der DE 10 2014 007 063 A1 ist eine Welle-Nabe-Verbindung bekannt, bei welcher eine Adapterwelle mit einer Welle mittels Spannring verbunden ist.

Aus der CN 203 835 994 U ist ebenfalls eine Welle-Nabe-Verbindung bekannt.

Aus der US 2015 / 0 300 414 A1 ist ein Planetengetriebe mit einer Transportsicherung für eine eintreibende Adapterwelle eines Planetengetriebes bekannt.

Aus der DE 10 2011 013 887 A1 ist eine Klemmkupplung zur drehfesten Verbindung einer Welle mit einer Nabe bekannt, wobei zwei einander diamtral gegenüber angeordnete Gewindestifte vorgesehen sind.

Aus der DE 10 2004 01 361 B3 ist eine Verbindung einer geschlitzten Hohlwelle mit einer Welle bekannt.

Der Erfindung liegt daher die Aufgabe zugrunde, eine kraftschlüssige Verbindung zwischen Welle und Adapterwelle weiterzubilden.

Erfindungsgemäß wird die Aufgabe bei der Anordnung nach den in Anspruch 1 angegebenen Merkmalen gelöst.

Wichtige Merkmale der Erfindung bei der Anordnung zur kraftschlüssigen Verbindung einer Adapterwelle mit einer Welle mittels eines Spannrings sind, dass der Spannring auf die Adapterwelle aufgesteckt ist,
wobei der Spannring auf die Adapterwelle aufgesteckt ist,
wobei die Welle in die Adapterwelle eingesteckt ist,
wobei der Spannring eine erste radial durchgehende Gewindebohrung aufweist, in welche ein erstes Schraubteil, insbesondere erster Gewindestift, eingeschraubt ist, das auf die Adapterwelle drückt,
wobei der Spannring eine zweite radial durchgehende Gewindebohrung aufweist, in welche ein zweites Schraubteil, insbesondere zweiter Gewindestift, eingeschraubt ist,
wobei das zweite Schraubteil in eine Vertiefung der Adapterwelle zumindest teilweise hineinragt, insbesondere und auf die Adapterwelle drückt.

Erfindungsgemäß ist eine Verliersicherung mittels des zweiten Gewindestifts gebildet, da er in eine Vertiefung hineinragt. Die Schrumpfverbindung, also kraftschlüssige Verbindung, wird mittels des ersten Gewindestifts bewirkt. Somit ist einerseits eine hohe Andruckkraft mittels des ersten Gewindestifts und eine Verliersicherung mittels des zweiten Gewindestifts bewirkt.

Bei einer vorteilhaften Ausgestaltung ist die Vertiefung als Sacklochbohrung, insbesondere als von radial außen eingebrachte, insbesondere radial gerichtete, Sacklochbohrung, ausgeführt, insbesondere also nicht radial durch die Wandung der Adapterwelle durchgehend ausgeführt. Von Vorteil ist dabei, dass eine einfache Herstellung der Vertiefung bewirkbar ist.

Bei einer vorteilhaften Ausgestaltung ist derjenige Oberflächenbereich der Adapterwelle, auf den der erste Gewindestift drückt, diametral zur Vertiefung angeordnet, insbesondere in Umfangsrichtung an der Adapterwelle,
insbesondere wobei der von dem Oberflächenbereich axial überdeckte Bereich mit dem von der Vertiefung axial überdeckten Bereich überlappt oder diesen umfasst. Von Vorteil ist
dabei, dass bei geeigneter Dimensionierung der Abflachung und der Vertiefung die Adapterwelle ausgewuchtet ist, also keine zusätzlichen Auswuchtungsmaßnahmen notwendig sind. Das Trägheitsmoment des zur Herstellung der Vertiefung entfernten Materials entspricht also vorzugsweise dem Trägheitsmoment des zur Herstellung der Vertiefung entfernten Materials.

Erfindungsgemäß ist derjenige Oberflächenbereich der Adapterwelle, auf den der erste Gewindestift drückt als Abflachung, insbesondere als tangential zur Drehachse der Adapterwelle ausgerichtete Abflachung, ausgeführt. Von Vorteil ist dabei, dass eine einfache Herstellung durch Planschleifen, also Flachschleifen, ausführbar ist.

Erfindungsgemäß weist die Adapterwelle Axialschlitze auf, wobei die Axialschlitze in Umfangsrichtung regelmäßig voneinander beabstandet sind und/oder die Axialschlitze radial durchgehend sind und/oder an einem ersten axialen Ende der Adapterwelle münden, insbesondere in die Umgebung. Von Vorteil ist dabei, dass eine hohe Elastizität in einfacher Weise erreichbar ist.

Bei einer vorteilhaften Ausgestaltung ist die Welle in einen als Hohlwellenbereich ausgeführten Bereich der Adapterwelle eingesteckt, insbesondere koaxial angeordnet zur Adapterwelle. Von Vorteil ist dabei, dass eine einfache Herstellung ermöglicht ist.

Erfindungsgemäß sind die Axialschlitze zum axialen Ende der Adapterwelle offen ausgeführt, insbesondere münden also in die Umgebung, insbesondere Umgebungsluft. Von Vorteil ist dabei, dass eine hohe Elastizität in einfacher Weise herstellbar ist.

Erfindungsgemäß umfasst der von der Vertiefung in Umfangsrichtung überdeckte Bereich den von einem ersten der Axialschlitze in Umfangsrichtung überdeckten Bereich,
und/oder ist der von der Vertiefung in axialer Richtung überdeckte Bereich vom Axialschlitz in axialer Richtung überdeckten Beriech umfasst. Von Vorteil ist dabei, dass der Axialschlitz durch die Vertiefung durchgeht. Somit muss bei Herstellung der Vertiefung wenig Material entfernt werden.

Bei einer vorteilhaften Ausgestaltung weist der erste Gewindestift einen mindestens dreimal größeren Durchmesser auf als der zweite Gewindestift
und/oder weist
die erste Gewindebohrung einen mindestens dreimal größeren Durchmesser auf als die zweite Gewindebohrung. Von Vorteil ist dabei, dass der erste Gewindestift im Wesentlichen die kraftschlüssige Verbindung bewirkt und der zweite Gewindestift die Verliersicherung.

Bei einer vorteilhaften Ausgestaltung weist die Adapterwelle an ihrem axialen Endbereich eine Fase, insbesondere Einführschräge, auf. Von Vorteil ist dabei, dass ein leichtgängiges Aufstecken des Spannrings ausführbar ist, da die Fase an der radial äußeren Oberfläche angeordnet ist, also das Aufstecken des Spannrings erleichtert, indem die Wandstärke der Wandung der Adapterwelle, also die Wanddicke des hohlen Bereichs der Adapterwelle, in axialer Richtung zunimmt, also der Spannring auf einem während des Aufsteckens zunehmend dickeren Wandbereich angeordnet ist.

Bei einer vorteilhaften Ausgestaltung weist der Spannring an seinem axialen Endbereich eine Einführschräge auf. Von Vorteil ist dabei, dass ein leichtgängiges Aufstecken ermöglicht ist, wobei der geschlitzte Bereich der Adapterwelle zunehmend auf die Vollwelle aufgeschrumpft wird.

Unter ,Aufschrumpfen wird hier nicht ein thermisch bedingtes Sich-Zusammenziehen, sondern ein mechanisch bedingtes Sich-Zusammenziehen verstanden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
Die Figuren 1 bis 5 zeigen ein erstes Ausführungsbeispiel.
In der Figur 1 ist ein Längsschnitt durch eine Spanneinheit, also Spannanordnung, aufweisend eine Adapterwelle 1 mit aufgestecktem Spannring 4 und erstem Gewindestift 2 sowie zweitem Gewindestift 3 zur Verliersicherung des Spannrings 4, dargestellt.
In der Figur 2 ist eine Schrägansicht aus einer ersten Blickrichtung auf die Adapterwelle 1 mit einer Abflachung als Andrückfläche für den ersten Gewindestift 2 dargestellt.
In der Figur 3 ist eine Schrägansicht aus einer anderen Blickrichtung auf die Adapterwelle 1 dargestellt, wobei eine als Sacklochbohrung ausgeführte Bohrung 30 zur Aufnahme des zweiten Gewindestifts 3 dargestellt ist.
In der Figur 4 ist die Spanneinheit in Explosionsdarstellung in Schrägansicht dargestellt.
In der Figur 5 ist die Spanneinheit angeschnitten in Schrägansicht dargestellt.

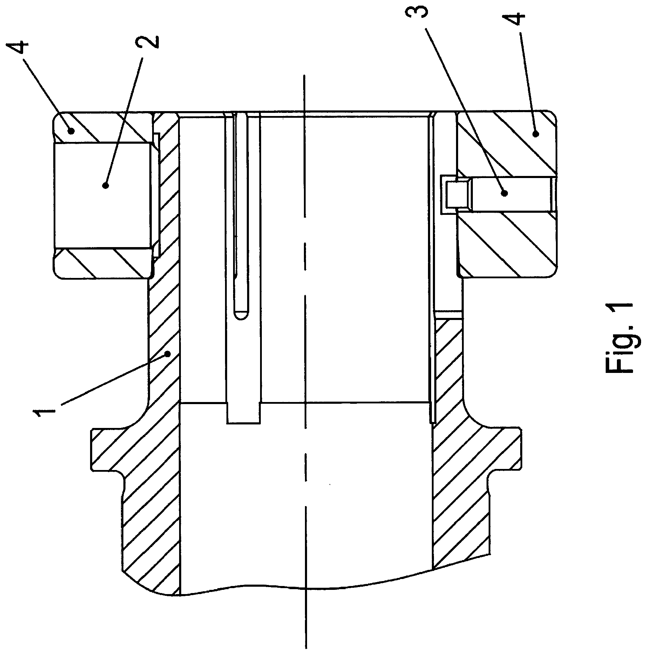

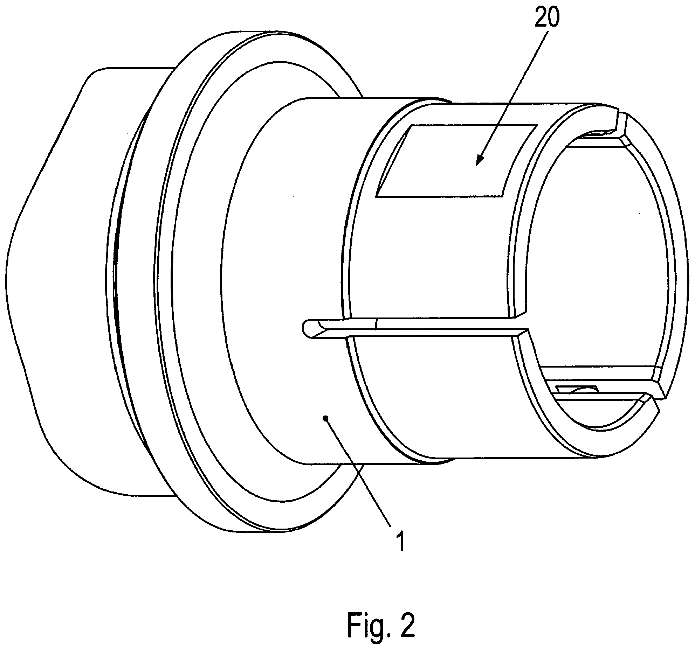

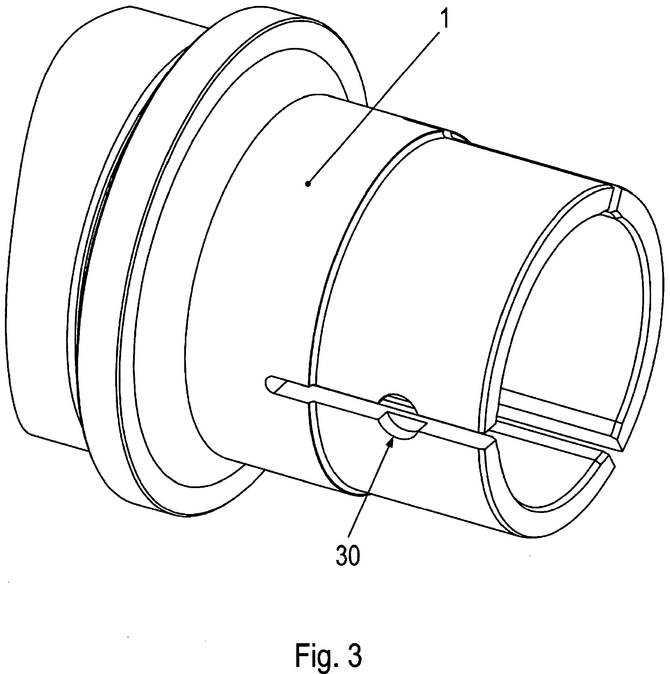

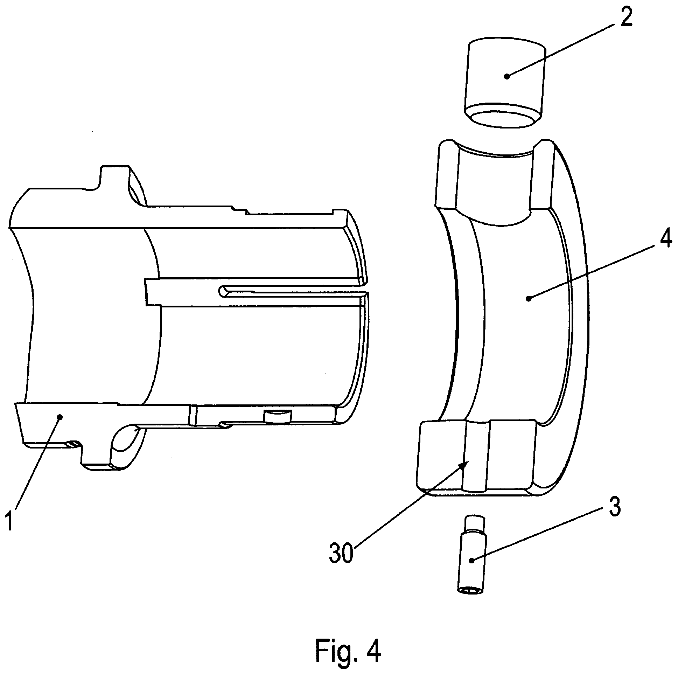

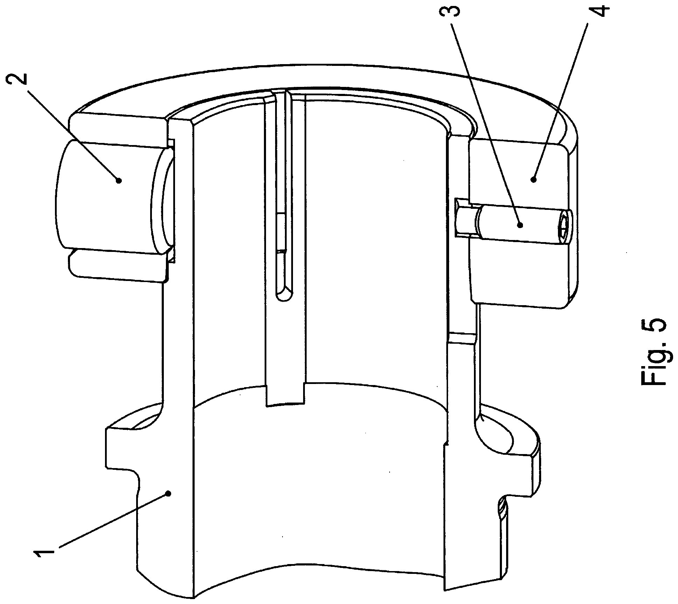

Wie in den Figuren 1 bis 5 dargestellt, weist die Adapterwelle 1 einen Hohlwellenbereich auf, der axial sich erstreckende Schlitze, also Axialschlitze, aufweist. Vorzugsweise sind die Axialschlitze voneinander in Umfangsrichtung regelmäßig beabstandet und erstrecken sich von dem axial äußeren ersten Endbereich der Adapterwelle 1 bis zu einer axialen Position, die außerhalb des von dem Spannring 4 überdeckten axialen Bereich angeordnet ist. Die bevorzugt gewählte Anzahl der Schlitze beträgt drei.

In die Adapterwelle 1 ist eine in den Figuren nicht dargestellte Vollwelle eingeführt. Somit wird diese Vollwelle von der Adapterwelle 1 radial umgeben.

Ein erster Gewindestift 2 ist in eine durch den Spannring 4 radial durchgehende Gewindebohrung eingeschraubt und drückt auf eine an der Adapterwelle 1 angeordnete Abflachung 20. Somit weist die Adapterwelle 1 keine durchgehende Ausnehmung auf für den ersten Gewindestift 2.

Die Abflachung 20 ist an der Außenseite der Adapterwelle 1 ausgeführt und tangential zur Adapterwelle 1 ausgerichtet, insbesondere also senkrecht zu einer radialen Richtung ausgerichtet, welche parallel zur Normalenrichtung der Abflachung 20 ausgerichtet ist.

Der Gewindestift 2 drückt auf die Abflachung 20.

Im von der Abflachung 20 überdeckten axialen Bereich ist die Adapterwelle 1 an ihrem äußeren Umfang zylindrisch ausgeführt mit Ausnahme der Axialschlitze.

Somit ist mittels Einschrauben des ersten Gewindestiftes 2 in die durch den Spannring durchgehende Gewindebohrung ein Andrücken der Adapterwelle 1 an die Vollwelle ermöglicht, insbesondere also eine Schrumpfverbindung realisiert.

Vorzugsweise ist eine zweite, durch den Spannring 4 radial durchgehende Gewindebohrung diametral gegenüber von der ersten durch den Spannring 4 durchgehenden Gewindebohrung vorgesehen.

Diametral gegenüber zur Abflachung 20 der Adapterwelle 1 ist eine Bohrung 30 in die Adapterwelle eingebracht und dient zum Andrücken des zweiten Gewindestifts 3, dessen Gewindebereich in die zweite, im Spannring angeordnete, radial durchgehende Gewindebohrung eingeschraubt ist.

Die Bohrung 30 ist zwar als Sackloch ausgeführt, überlappt aber mit einem Axialschlitz. Somit ist der zweite Gewindestift 3 in die zweite Gewindebohrung, welche radial durchgehend durch den Spannring 4 ausgeführt ist, einschraubbar und drückt dann gegen den Boden der Bohrung 30. Auf diese Weise ist eine Verliersicherung in axialer Richtung und in Umfangsrichtung bewirkt.

Vorzugsweise durchquert der Axialschlitz die Bohrung 30 mittig. Auf diese Weise ist die Abflachung 20, also diejenige Fläche, auf welche der erste Gewindestift 2 drückt, diametral zur Bohrung 30 angeordnet. Da der erste Gewindestift 2 einen sehr hohen Anpressdruck erzeugt, ist somit ein Schrumpfen der Adapterwelle 1 bewirkbar, ohne dass die Bohrung 30 sich verschiebt. Der zweite Gewindestift bringt nur einen kleinen Anpressdruck auf die Bodenfläche 30 der Bohrung 30. Der zweite Gewindestift 3 weist einen viel kleineren Durchmesser auf als der erste Gewindestift 2. Ebenso ist der Durchmesser der zweiten Gewindebohrung viel kleiner, insbesondere mindestens dreimal kleiner, als der Durchmesser der ersten Gewindebohrung.

Auf diese Weise ist die Adapterwelle 1 in Umfangsrichtung gesichert.

Der erste Gewindestift 2 hat also die Funktion, auf den Spannring 4 zu drücken und somit die Klemmung der Welle zu bewirken.

Vorzugsweise ist an der Adapterwelle 1 eine Einführschräge vorgesehen, die ein leichtgängiges Einschieben der Adapterwelle 1 auf den Spannring 4 bewirkt. Bei diesem Aufstecken des Spannrings 4 auf die Adapterwelle 1 wird die Adapterwelle 1 elastisch verformt, insbesondere radial zusammengedrückt, radial auf die in der Adapterwelle 1 aufgenommene Welle geschrumpft. Infolge der Axialschlitze ist diese elastische Verformung mit geringem Kraftaufwand bewirkbar.

Nach Erreichen der vorgesehenen Position des Spannrings 4 entspannt sich die Adapterwelle 1 wieder und somit ist die Welle ohne besonderen Kraftaufwand einführbar. Danach wird die kraftschlüssige Verbindung hergestellt, indem der Gewindestift 2 auf die Abflachung 20 drückt und der Gewindestift 3 die Sicherung in Umfangsrichtung übernimmt.

Die Adapterwelle 1, die beiden Gewindestifte (2, 3) sowie der Spannring 4 bilden somit ein System zur kraftschlüssigen Verbindung aus.

Die Innenwandung des Spannrings 4 ist wie ein Bereich eines Rotationskörpers ausgeführt, also mit in jeder axialen Position konstantem Radialabstand, also von der Umfangsposition unabhängigen Radialabstand.

Die Erfindung ermöglicht also eine Spannverbindung, insbesondere Schrumpfscheibenverbindung, zwischen einer Adapterwelle und einer Welle, insbesondere Vollwelle, mit integrierter Verliersicherung.

### Bezugszeichenliste

1 Adapterwelle, insbesondere Hohlwellenbereich
2 Gewindestift
3 zweiter Gewindestift
4 Spannring
20 Abflachung
30 Gewindebohrung

## Patentansprüche

1. Anordnung zur kraftschlüssigen Verbindung einer Adapterwelle (1) mit einer Welle mittels eines Spannrings (4),
wobei der Spannring (4) auf die Adapterwelle (1) aufgesteckt ist,
wobei die Welle in die Adapterwelle (1) eingesteckt ist,
wobei der Spannring (4) eine erste radial durchgehende Gewindebohrung aufweist, in welche ein erstes Schraubteil, insbesondere erster Gewindestift (2), eingeschraubt ist, das auf die Adapterwelle (1) drückt,
**wobei** der Spannring (4) eine zweite radial durchgehende Gewindebohrung aufweist, in welche ein zweites Schraubteil, insbesondere zweiter Gewindestift (3), eingeschraubt ist,
wobei das zweite Schraubteil in eine Vertiefung (30) der Adapterwelle (1) zumindest teilweise hineinragt, insbesondere und auf die Adapterwelle (1) drückt,
**wobei die Adapterwelle (1) Axialschlitze aufweist, wobei die Axialschlitze in Umfangsrichtung regelmäßig voneinander beabstandet sind und/oder die Axialschlitze radial durchgehend sind und/oder an einem ersten axialen Ende der Adapterwelle (1) münden, insbesondere in die Umgebung,**
**wobei die Axialschlitze zum axialen Ende der Adapterwelle (1) offen ausgeführt sind, insbesondere also in die Umgebung, insbesondere Umgebungsluft, münden,**
**dadurch gekennzeichnet, dass**
derjenige Oberflächenbereich der Adapterwelle (1), auf den der erste Gewindestift (2) drückt, als Abflachung (20), insbesondere als tangential zur Adapterwelle (1) ausgerichtete Abflachung (20), ausgeführt ist,
wobei der von der Vertiefung (30) in Umfangsrichtung überdeckte Bereich den von einem
ersten der Axialschlitze in Umfangsrichtung überdeckten Bereich umfasst,
und wobei der von der Vertiefung in axialer Richtung überdeckte Bereich vom Axialschlitz in axialer Richtung überdeckten Beriech umfasst ist.

2. Anordnung nach Anspruch 1,
**dadurch gekennzeichnet, dass**
die Vertiefung (30) als Sacklochbohrung, insbesondere als von radial außen eingebrachte, insbesondere radial gerichtete, Sacklochbohrung, ausgeführt ist, insbesondere also nicht radial durch die Wandung der Adapterwelle (1) durchgehend ausgeführt ist.

3. Anordnung nach mindestens einem der vorangegangenen Ansprüche,
**dadurch gekennzeichnet, dass**
**derjenige Oberflächenbereich der Adapterwelle (1), auf den der erste Gewindestift (2) drückt, diametral zur Vertiefung angeordnet ist,** insbesondere eine Umfangsrichtung an der Adapterwelle (1),
insbesondere wobei der von dem Oberflächenbereich axial überdeckte Bereich mit dem von der Vertiefung axial überdeckten Bereich überlappt oder diesen umfasst.

4. Anordnung nach mindestens einem der vorangegangenen Ansprüche,
**dadurch gekennzeichnet, dass**
die Abflachung (20) senkrecht zu einer radialen Richtung ausgerichtet ist, welche parallel zur Normalenrichtung der Abflachung (20) ausgerichtet ist.

5. Anordnung nach mindestens einem der vorangegangenen Ansprüche, **dadurch gekennzeichnet, dass**
die Welle in einen als Hohlwellenbereich ausgeführten Bereich der Adapterwelle (1) eingesteckt ist, insbesondere koaxial angeordnet ist zur Adapterwelle (1).

6. Anordnung nach mindestens einem der vorangegangenen Ansprüche, **dadurch gekennzeichnet, dass**
die Axialschlitze zum axialen Ende der Adapterwelle (1) offen ausgeführt sind, insbesondere also in die Umgebung, insbesondere Umgebungsluft, münden.

7. Anordnung nach mindestens einem der vorangegangenen Ansprüche, **dadurch gekennzeichnet, dass**
der erste Gewindestift (2) einen mindestens dreimal größeren Durchmesser aufweist als der zweite Gewindestift (3)
und/oder dass
die erste Gewindebohrung einen mindestens dreimal größeren Durchmesser aufweist als die zweite Gewindebohrung.

8. Anordnung nach mindestens einem der vorangegangenen Ansprüche, **dadurch gekennzeichnet, dass**
die Adapterwelle (1) an ihrem axialen Endbereich eine Fase, insbesondere Einführschräge, aufweist.

9. Anordnung nach mindestens einem der vorangegangenen Ansprüche, **dadurch gekennzeichnet, dass**
der Spannring an seinem axialen Endbereich eine Einführschräge aufweist.

10. **Anordnung nach mindestens einem der vorangegangenen Ansprüche,**
**dadurch gekennzeichnet, dass**
**die Anzahl der Axialschlitze drei beträgt.**

## Claims

1. An arrangement for the force-locking connection of an adapter shaft (1) to a shaft by means of a clamping ring (4),
wherein the clamping ring (4) is mounted on the adapter shaft (1),
wherein the shaft is inserted into the adapter shaft (1),
wherein the clamping ring (4) has a first radially uninterrupted threaded bore into which is screwed a first screwing part, in particular first grub screw (2), which presses on the adapter shaft (1),
wherein the clamping ring (4) has a second radially uninterrupted threaded bore into which is screwed a second screwing part, in particular second grub screw (3),
wherein the second screwing part at least partially extends into an indentation (30) of the adapter shaft (1), in particular and presses on the adapter shaft (1),
wherein the adapter shaft (1) has axial slots, wherein the axial slots are spaced apart regularly from each other in the peripheral direction and/or the axial slots are radially uninterrupted and/or open out on a first axial end of the adapter shaft (1), in particular into the surroundings,
wherein the axial slots are embodied to be open in relation to the axial end of the adapter shaft (1), in particular therefore open into the surroundings, in particular ambient air,
**characterised in that**
that surface region of the adapter shaft (1) on which the first grub screw (2) presses is embodied as a flattened portion (20), in particular as a flattened portion (20) oriented tangentially to the adapter shaft (1),
with the region covered by the indentation (30) in the peripheral direction encompassing the region covered by a first one of the axial slots in the peripheral direction,
and with the region covered by the indentation in the axial direction being encompassed by the region covered axial slot [sic] in the axial direction.

2. An arrangement according to claim 1,
**characterised in that**
the indentation (30) is embodied as a blind bore, in particular as a blind bore formed from radially outside, in particular directed radially, in particular therefore is not made radially uninterrupted through the wall of the adapter shaft (1).

3. An arrangement according to at least one of the preceding claims,
**characterised in that**
that surface region of the adapter shaft (1) on which the first grub screw (2) presses is arranged diametrically to the indentation, in particular a peripheral direction on the adapter shaft (1),
in particular with the region axially covered by the surface region overlapping with the region axially covered by the indentation or encompassing it.

4. An arrangement according to at least one of the preceding claims, **characterised in that**
the flattened portion (20) is oriented perpendicularly to a radial direction which is oriented parallel to the normal direction of the flattened portion (20).

5. An arrangement according to at least one of the preceding claims, **characterised in that**
the shaft is inserted into a region of the adapter shaft (1) embodied as a hollow-shaft region, in particular is arranged coaxially to the adapter shaft (1).

6. An arrangement according to at least one of the preceding claims, **characterised in that**
the axial slots are embodied to be open in relation to the axial end of the adapter shaft (1), in particular therefore open into the surroundings, in particular ambient air.

7. An arrangement according to at least one of the preceding claims, **characterised in that**
the first grub screw (2) has a diameter at least three times larger than that of the second grub screw (3)
and/or **in that**
the first threaded bore has a diameter at least three times larger than that of the second threaded bore.

8. An arrangement according to at least one of the preceding claims, **characterised in that**
the adapter shaft (1) has on its axial end region a chamfer, in particular lead-in slope.

9. An arrangement according to at least one of the preceding claims, **characterised in that**
the clamping ring has a lead-in slope on its axial end region.

10. An arrangement according to at least one of the preceding claims, **characterised in that**
the number of axial slots is three.

## Revendications

1. Agencement destiné à relier un arbre adaptateur (1) à un arbre avec engagement positif, au moyen d'une bague de serrage (4),
laquelle bague de serrage (4) est emboîtée sur l'arbre adaptateur (1),
l'arbre étant emboîté dans ledit arbre adaptateur (1),
sachant que ladite bague de serrage (4) est munie d'un premier perçage taraudé radialement ininterrompu dans lequel est vissé(e) une première partie vissable, en particulier un premier goujon fileté (2) exerçant une pression sur l'arbre adaptateur (1), laquelle bague de serrage (4) est dotée d'un second perçage taraudé radialement ininterrompu dans lequel est vissé(e) une seconde partie vissable, en particulier un second goujon fileté (3),
ladite seconde partie vissable pénétrant, au moins partiellement, dans un renfoncement (30) de l'arbre adaptateur (1) et exerçant notamment une pression sur ledit arbre adaptateur (1),
lequel arbre adaptateur (1) comporte des fentes axiales, sachant que lesdites fentes axiales sont distantes régulièrement les unes des autres dans la direction périphérique, et/ou que lesdites fentes axiales sont ininterrompues dans le sens radial et/ou débouchent au niveau d'une première extrémité axiale dudit arbre adaptateur (1), en particulier dans l'espace environnant,
lesdites fentes axiales étant de réalisation ouverte en direction de ladite extrémité axiale de l'arbre adaptateur (1), c'est-à-dire qu'elles débouchent notamment dans l'espace environnant, en particulier dans l'air ambiant,
**caractérisé par le fait que**
la zone de la surface de l'arbre adaptateur (1), sur laquelle la première partie vissable (2) exerce une pression, est réalisée sous la forme d'un méplat (20), en particulier d'un méplat (20) orienté tangentiellement par rapport audit arbre adaptateur (1),
sachant que la région couverte par le renfoncement (30) dans la direction périphérique inclut la région couverte, dans ladite direction périphérique, par une première fente au sein des fentes axiales,
et sachant que la région couverte par ledit renfoncement, dans la direction axiale, est comprise dans la région couverte par ladite fente axiale dans ladite direction axiale.

2. Agencement selon la revendication 1,
**caractérisé par le fait que**
le renfoncement (30) est réalisé sous la forme d'un perçage borgne, en particulier d'un perçage borgne pratiqué radialement depuis l'extérieur, notamment orienté dans le sens radial, c'est-à-dire, en particulier, non conçu pour traverser l'intégralité de la paroi de l'arbre adaptateur (1) dans le sens radial.

3. Agencement selon au moins l'une des revendications précédentes, **caractérisé par le fait que**
la zone de la surface de l'arbre adaptateur (1), sur laquelle la première partie vissable (2) exerce une pression, est disposée diamétralement par rapport au renfoncement, en particulier dans la direction périphérique sur ledit arbre adaptateur (1),
sachant notamment que la région, couverte axialement par ladite zone de surface, est en chevauchement avec la région couverte axialement par ledit renfoncement, ou inclut cette dernière.

4. Agencement selon au moins l'une des revendications précédentes, **caractérisé par le fait que**
le méplat (20) est orienté perpendiculairement à une direction radiale orientée parallèlement à la direction normale dudit méplat (20).

5. Agencement selon au moins l'une des revendications précédentes, **caractérisé par le fait que**
l'arbre est emboîté dans une région de l'arbre adaptateur (1) réalisée sous la forme d'une zone d'arbre creux et est disposé, en particulier, coaxialement par rapport audit arbre adaptateur (1).

6. Agencement selon au moins l'une des revendications précédentes, **caractérisé par le fait que**
les fentes axiales sont de réalisation ouverte en direction de l'extrémité axiale de l'arbre adaptateur (1), c'est-à-dire qu'elles débouchent notamment dans l'espace environnant, en particulier dans l'air ambiant.

7. Agencement selon au moins l'une des revendications précédentes, **caractérisé par le fait que**
la première partie vissable (2) est pourvue d'un diamètre au moins trois fois supérieur à celui de la seconde partie vissable (3) ;
et/ou **par le fait que**
le premier perçage taraudé est doté d'un diamètre au moins trois fois supérieur à celui du second perçage taraudé.

8. Agencement selon au moins l'une des revendications précédentes, **caractérisé par le fait que**
l'arbre adaptateur (1) comporte un chanfrein, notamment un biseau d'insertion au niveau de sa région extrême axiale.

9. Agencement selon au moins l'une des revendications précédentes, **caractérisé par le fait que**
la bague de serrage comporte un biseau d'insertion au niveau de sa région extrême axiale.

10. Agencement selon au moins l'une des revendications précédentes, **caractérisé par le fait que**
les fentes axiales sont au nombre de trois.
